# EUROPEAN PATENT SPECIFICATION

(11) **EP 2 799 785 B1**
(45) Date of publication and mention of the grant of the patent: **28.11.2018**
(21) Application number: 14166499.5
(22) Date of filing: 30.04.2014
(51) Int. Cl.: F24F 1/00, F24F 11/00

(54) **Air conditioner and control method thereof**
Klimaanlage und Steuerverfahren dafür
Climatiseur et son procédé de fonctionnement

(30) Priority: 30.04.2013 KR 20130048523
(43) Date of publication of application: 05.11.2014
(73) Proprietor: LG ELECTRONICS INC., Yeongdeungpo-gu Seoul 150-721 (KR)
(72) Inventor: Kim, Jihan, 641-110 Kyungsangnam-do (KR); Song, Changhyun, 641-110 Kyungsangnam-do (KR)
(74) Representative: Vossius & Partner Patentanwälte Rechtsanwälte mbB

(56) References cited:
- EP-A1- 2 351 973
- WO-A1-2008/123273
- WO-A1-2013/046605
- US-A1- 2012 022 702

## Description

### CROSS-REFERENCE TO RELATED APPLICATION

This application claims the priority benefit of Korean Patent Application No. 10-2013-0048523 filed on April 30, 2013, in the Korean Intellectual Property Office.

### BACKGROUND OF THE INVENTION

### 1. Field of the invention

Embodiments of the present invention relate to an air conditioner which adopts different control methods in response to an electricity regulation signal fed from an electric power company, and a control method of the air conditioner.

### 2. Description of the Related Art

An air conditioner is installed to provide human beings with a more pleasant indoor environment by discharging cold or warm air into a room to adjust an indoor temperature and to purify indoor air. Typically, an air conditioner is comprised of an indoor unit installed in a room, the indoor unit including a heat exchanger, and an outdoor unit including a compressor, a heat exchanger, and other components to supply refrigerant to the indoor unit.

In the typical air conditioner, the indoor unit including the heat exchanger and the outdoor unit including the compressor, the heat exchanger, and other components are controlled separately from each other. Operation of the indoor unit and the outdoor unit is accomplished by controlling supply of power to the compressor or the heat exchanger. In addition, in the air conditioner, at least one indoor unit may be connected to the outdoor unit, and refrigerant is supplied to the indoor unit based on a requested operating state to allow the indoor unit to be operated in a cooling mode or a heating mode.

A cooling operation or a heating operation of the air conditioner depends on the flow of refrigerant. In the case of a cooling operation, once high-temperature and high-pressure liquid-phase refrigerant is supplied from the compressor of the outdoor unit to the indoor unit by way of the heat exchanger of the outdoor unit, the refrigerant undergoes expansion and evaporation in the heat exchanger of the indoor unit, thereby lowering a temperature of surrounding air. The resulting cold air is then discharged into a room via rotation of an indoor unit fan. In the case of a heating operation, once high-temperature and high-pressure gas-phase refrigerant is supplied from the compressor of the outdoor unit to the indoor unit, the high-temperature and high-pressure gas-phase refrigerant is liquefied in the heat exchanger of the indoor unit, thereby radiating heat to surrounding air. The resulting warm air is then discharged into a room via rotation of the indoor unit fan.

Use of air conditioners is maximized throughout the country in summer or winter, which may cause serious electricity consumption. Thus, discussions concerning national systems to control the use of electricity are intensifying. When implementing a system to guide use reduction of various electronic appliances in a time slot during which electricity consumption peaks, this requires research on air conditioners capable of regulating electricity consumption.

US 2012/022702 (A1) relates to an air conditioner and a method of controlling the same, wherein the method of controlling the air conditioner includes receiving an electric power rate information, and distributing an internal air from a first indoor room to a second indoor room to reduce a temperature difference between a plurality of indoor rooms.

### SUMMARY OF THE INVENTION

Embodiments of the present invention provide an air conditioner which may control electricity consumption in response to an electricity regulation signal.

In accordance with one embodiment of the present invention, the above and other objects can be accomplished by the provision of an air conditioner according to claim 1.

In accordance with another embodiment of the present invention, there is provided a control method of an air conditioner according to claim 11.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating the supply of power to an air conditioner in accordance with one embodiment of the present invention;
FIG. 2 is a view illustrating a configuration of an air conditioner in accordance with one embodiment of the present invention;
FIG. 3 is a view illustrating an operating method of an air conditioner in accordance with one embodiment of the present invention;
FIG. 4 is a view illustrating a system including an air conditioner in accordance with one embodiment of the present invention;
FIG. 5 is a view illustrating configurations of an outdoor unit and an indoor unit included in an air conditioner in accordance with one embodiment of the present invention;
FIGS. 6 and 7 are views illustrating a method of controlling the indoor unit by the outdoor unit of the air conditioner in accordance with one embodiment of the present invention;
FIGS. 8 and 9 are views illustrating the indoor unit of the air conditioner and a display operation of the indoor unit in accordance with one embodiment of the present invention; and
FIG. 10 is a flowchart illustrating a control method of an air conditioner in accordance with one embodiment of the present invention.

### DETAILED DESCRIPTION OF THE PREFERRED EMBODIMENTS

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

Terms 'first', 'second', etc. may be used to describe various elements. However, these elements are not restricted by such terms. These terms are used to distinguish between one element and another element. For example, first contact may be referred to as second contact without departing from the scope of the present invention. In the same manner, second contact may be referred to as first contact. The first contact and the second contact may be both contact but not the same contact.

Terms used in the description of the invention are provided only to explain specific embodiments but are not intended to restrict the invention. In the description of the invention and the accompanying claims, the singular forms are intended to include the plural forms as well, unless context clearly indicates otherwise. The use of marks may indicate any one or both of the singular forms and the plural forms of the terms, and vice versa.

It will be understood that the term "and/or" refers to one or more possible combinations of specified relevant items and includes such combinations. It will be further understood that the terms "comprises" and/or "comprising" used in this specification designate presence of specified features, integers, steps, operations, elements, and/or components but do not exclude presence or addition of one or more other features, integers, steps, operations, elements, components, and/or groups thereof.

The term "if" may be interpreted to mean "when" or "upon" or "in response to determining" or "in response to detecting" from the context. In the same manner, the phrases "in a determined case" or "in a case in which [a specified condition or event] is detected" may be interpreted to mean "upon determining", "in response to determining", "upon detecting [a specified condition or event]" or "in response to detecting [a specified condition or event]" from the context.

Embodiments of computing devices, user interfaces for these devices, and associated processes to use these devices will be described below.

Hereinafter, embodiments of the present invention will be described in detail with reference to the accompanying drawings.

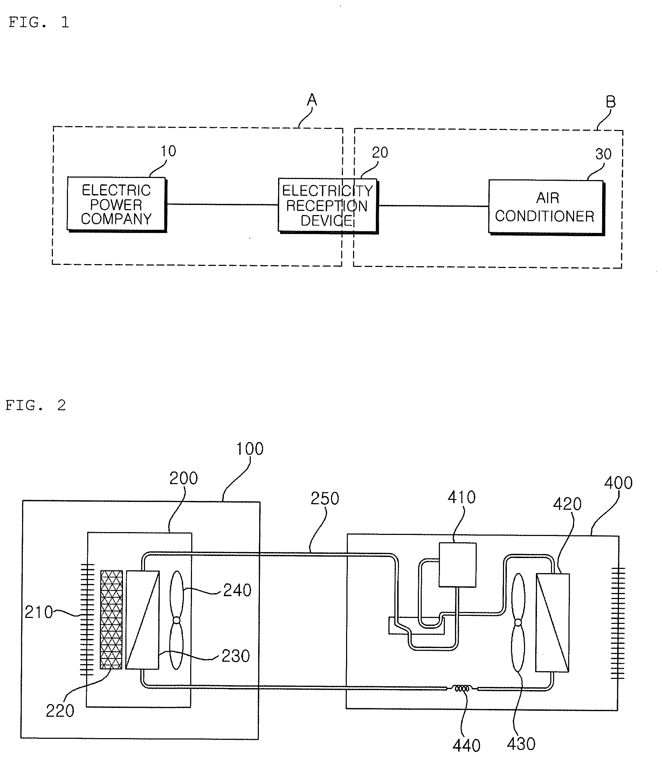

FIG. 1 is a view illustrating the supply of power to an air conditioner in accordance with one embodiment of the present invention.

Referring to FIG. 1, the air conditioner 30 in accordance with one embodiment of the present invention may be operated using power supplied by an electric power company 10.

The air conditioner 30 is a cooling/heating system, which may implement cooling of a room by repeating suction of high-temperature air from the room, heat exchange between the high-temperature air and low-temperature refrigerant, and discharge of heat-exchanged low-temperature air into the room, or may implement heating of a room via a reverse operation of the above operation. The air conditioner 30 is composed of a compressor, a condenser, an expansion valve, and an evaporator, which constitute a series of cycles.

The air conditioner 30 is divided into an outdoor unit that is usually installed at an outdoor place and more than one indoor unit that is usually installed inside a building. The outdoor unit may include a condenser and a compressor, and the indoor unit may include an evaporator. The outdoor unit and the indoor unit may be connected to a central controller (not shown) to receive a control signal.

The air conditioner 30 may receive power, supplied by the electric power company 10, by way of an electricity reception device 20. The electricity reception device 20 may extract an electricity regulation signal from the power supplied by the electric power company 10. The electricity reception device 20 may include a router, a modem, or the like, which extracts an electricity regulation signal from power, without being limited thereto.

In the present invention, the air conditioner 30 is adapted to adjust electricity consumption based on the electricity regulation signal. More particularly, the air conditioner 30 may adjust electricity consumption by differently controlling operation thereof based on multiple levels of the electricity regulation signal. For example, the air conditioner 30 may adjust electricity consumption by controlling operation of a plurality of indoor units, or by controlling operation of the compressor included in the outdoor unit.

The electricity reception device 20 may further include a switching circuit (not shown) to transmit different signals to the air conditioner 30 based on the level of the electricity regulation signal. The switching circuit (not shown) may convert the level of the electricity regulation signal into a signal that the air conditioner 30 can recognize, and transmit the same to the air conditioner 30.

FIG. 2 is a view illustrating a configuration of an air conditioner in accordance with one embodiment of the present invention.

Referring to FIG. 2, an indoor unit 200 of the air conditioner may be installed in an air conditioning space, i.e. an indoor space 100. The indoor unit 200 may include an auxiliary heater 220, an indoor heat exchanger 230, and an indoor fan 240, which are arranged in this sequence from the back of an indoor suction port 210 formed in a front face of the indoor unit 200.

Air of the indoor space 100 may be suctioned into the air conditioner through the indoor suction port 210, and the suctioned indoor air may be heat exchanged while passing through the indoor heat exchanger 230. Then, the resulting temperature adjusted air may be discharged into the indoor space 100 through an indoor discharge port (not shown).

The indoor fan 240 may create a flow path, along which indoor air is suctioned into the air conditioner and thereafter is discharged from the air conditioner. The auxiliary heater 220 may function as an auxiliary component to prevent unwanted temperature drop in the indoor space 100 during implementation of defrosting of a heating operation.

An outdoor unit 400 may be installed at the outside of the air conditioning space, i.e. at an outdoor place, and may be connected to the indoor unit 200 through a conduit 250. The outdoor unit 400 may include a compressor 410 that compresses refrigerant to attain high-temperature and high-pressure refrigerant, an outdoor heat exchanger 420 that condenses refrigerant during a cooling operation and evaporates refrigerant during a heating operation, an outdoor fan 430 that creates a flow path, along which outdoor air is suctioned into the outdoor unit 400 and thereafter is discharged from the outdoor unit, and an expansion device 440 that expands refrigerant to attain low-temperature and low-pressure refrigerant.

When the air conditioner begins a heating operation, a processor may transmit a control signal to each of the aforementioned components to initiate operation thereof. In response to the control signal transmitted from the processor, the indoor fan 240 may begin to rotate and the compressor 410 may compress refrigerant to discharge high-temperature and high-pressure refrigerant.

The high-temperature and high-pressure refrigerant, discharged from the compressor 420, is introduced into the indoor heat exchanger 230 and is heat exchanged with indoor air suctioned into the indoor unit 200 by torque of the indoor fan 240. The indoor air, which has been suctioned at a relatively low-temperature, may be raised in temperature via heat exchange with the refrigerant.

The refrigerant, heat exchanged while passing through the indoor heat exchanger 230, moves through the expansion device 440 and the outdoor heat exchanger 420 in sequence, and then is returned to the compressor 410. Thereafter, through repetitions of a heating cycle through the compressor 410, the indoor heat exchanger 230, the expansion device 440, and the outdoor heat exchanger 420 in this sequence, indoor temperature may be raised to a level that a user desires. In the case of a cooling cycle, refrigerant compressed in the compressor 410 may be moved through the expansion device 440 so as to be changed into low-temperature refrigerant, and then supplied to the indoor unit 200.

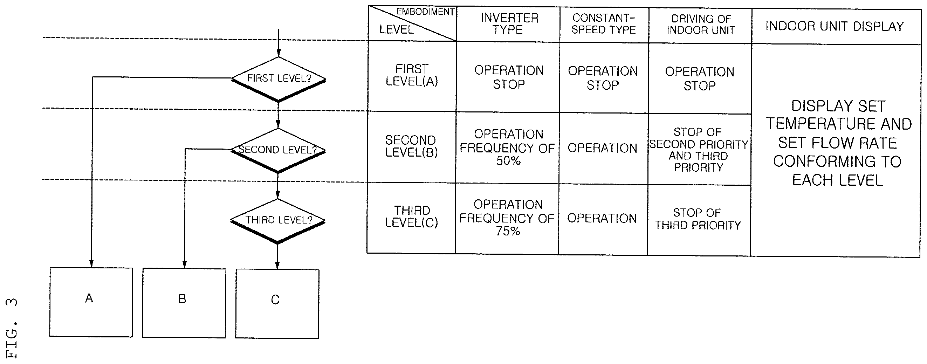

FIG. 3 is a view illustrating an operating method of an air conditioner in accordance with one embodiment of the present invention.

Referring to FIG. 3, the air conditioner in accordance with one embodiment may be controlled in different ways in response to an electricity regulation signal.

When an outdoor unit receives an electricity regulation signal, the outdoor unit may check required electricity consumption designated by the electricity regulation signal. For example, the electricity regulation signal may have any one of multiple levels. The outdoor unit 120 may check required electricity consumption by checking the level of the electricity regulation signal.

The outdoor unit may control an operating state of the air conditioner to conform to the checked electricity consumption. For example, the outdoor unit may adjust an operation frequency of a compressor (not shown) based on the required electricity consumption. In the following description, the electricity regulation signal may be assumed as having three levels, such as the first level, the second level, and the third level.

More particularly, the air conditioner may check the level of the electricity regulation signal. The outdoor unit may control operation of a compressor (not shown) based on the level of the electricity regulation signal.

Assuming that the air conditioner in accordance with one embodiment of the present invention is adapted to adjust an operation frequency of a compressor using an inverter, the operation frequency of the compressor may be controlled in response to an electricity regulation signal.

In a concrete example, when the electricity regulation signal has the first level, the air conditioner may power a compressor off. When the electricity regulation signal has the second level, the air conditioner may reduce the operation frequency of the compressor to 50%. When the electricity regulation signal has the third level, the air conditioner may reduce the operation frequency of the compressor to 75%.

Assuming that the air conditioner in accordance with one embodiment of the present invention is a constant-speed type air conditioner, the air conditioner may power a compressor on or off based on the level of an electricity regulation signal.

In a concrete example, the constant-speed type air conditioner may stop operation of the compressor when the electricity regulation signal has the first level. When the electricity regulation signal has the second level or the third level, the air conditioner may adjust electricity consumption by adjusting a set temperature or a set flow rate of an indoor unit while continuously operating the compressor. Naturally, it will be appreciated that the above description is merely one embodiment and the disclosure is not limited thereto.

In an alternative embodiment, when the air conditioner receives an electricity regulation signal, the air conditioner may stop operation of a compressor regardless of the level of the electricity regulation signal, although the disclosure is not limited thereto.

The air conditioner may implement a control operation to conform to required electricity consumption. To conform to the required electricity consumption, the air conditioner may adjust an operation frequency of a compressor included an outdoor unit, or may power the compressor on or off. Alternatively or additionally, the air conditioner may differentiate operation of a plurality of indoor units, or may adjust an operating state of the respective indoor units.

The air conditioner may individually control operation of a plurality of indoor units. To this end, the air conditioner may first prioritize the plurality of indoor units, and determine whether or not each indoor unit will be operated based on the priorities.

Assuming that the air conditioner defines the first priority, the second priority, and the third priority, a plurality of indoor units may correspond to each of the first priority, the second priority, and the third priority. That is, under the provision of a plurality of indoor units, two or more indoor units may correspond to the first priority, two or more indoor units may correspond to the second priority, and two or more indoor units may correspond to the third priority.

In one embodiment, the air conditioner may control a plurality of indoor units based on the level of an electricity regulation signal in such a manner that the indoor units are individually operated or not operated. For example, when the level of the electricity regulation signal is the third level, the air conditioner may stop operation of more than one indoor unit among the indoor units that corresponds to the third priority. For example, when the level of the electricity regulation signal is the second level, the air conditioner may stop operation of more than one indoor unit among the indoor units that corresponds to the second priority as well as the more than one indoor unit that corresponds to the third priority. For example, when the level of the electricity regulation signal is the first level, the air conditioner may stop operation of all of the indoor units.

A display may be included in each indoor unit to display a set temperature or a set flow rate of the indoor unit. The indoor unit may store data regarding a set temperature or a set flow rate corresponding to each level of an electricity regulation signal. Once the level of an electricity regulation signal is checked, the display of the indoor unit may display a set temperature or a set flow rate conforming to the level of the electricity regulation signal.

FIG. 3 illustrates a Table that shows a set flow rate or a set temperature based on the level of an electricity regulation signal, but it will be appreciated that content of the Table is merely one embodiment and the disclosure is not limited thereto.

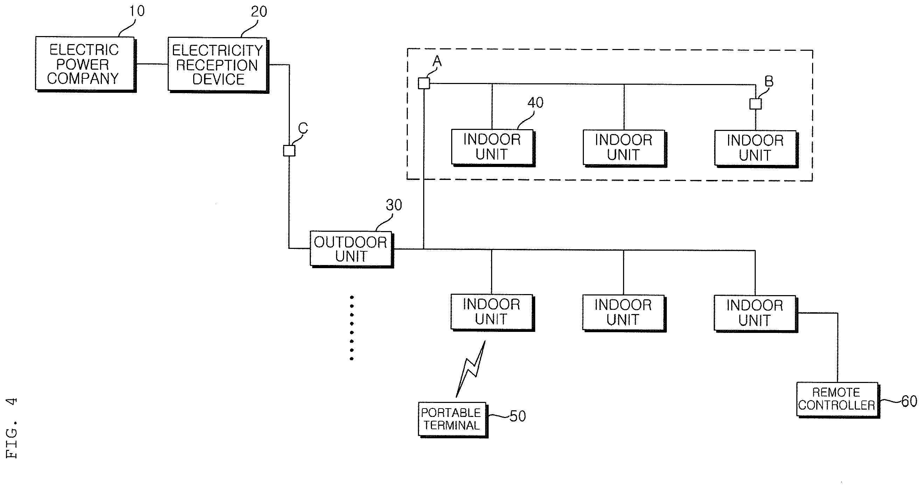

FIG. 4 is a view illustrating a system including an air conditioner in accordance with one embodiment of the present invention.

Referring to FIG. 4, the air conditioner system in accordance with one embodiment of the present invention includes the electricity reception device 20 that receives an electricity regulation signal from, e.g., the electric power company 10, an outdoor unit 30 that implements an operation based on the level of the electricity regulation signal, a plurality of indoor units 40 that implements an operation based on the level of the electricity regulation signal, a remote controller 60 used to control the indoor units 40, and a portable terminal 50 that receives the electricity regulation signal from the indoor units 40 and reads out information.

The electricity reception device 20 may be located in the outdoor unit 30 or each indoor unit 40. For example, the electricity reception device 20 may include a switching circuit to output a level signal indicating the level of the electricity regulation signal. The electricity reception device 20 including the switching circuit may be connected to the outdoor unit 30 or each indoor unit 40. The switching circuit may output different signals based on the level of the electricity regulation signal. Although the switching circuit may be an electronic circuit to output different signals based on the level of the electricity regulation signal, the kind of the switching circuit is not limited thereto.

In FIG. 4, the electricity reception device 20 is illustrated as being installed to the outdoor unit 30 (more particularly, connected to a point denoted by C) to transmit a level signal to the outdoor unit 30, but the disclosure is not limited thereto. For example, the electricity reception device 20 may be installed to any one indoor unit 40 or the plurality of indoor units 40, to transmit a level signal to any one indoor unit 40 or the plurality of indoor units 40.

Hereinafter, different exemplary embodiments will be described respectively in detail.

### First Embodiment employing Electricity Reception Device 20 installed to Outdoor Unit 30

The electricity reception device 20 may be installed to the outdoor unit 30 (more particularly, the electricity reception device 20 is connected to a point denoted by C). The outdoor unit 30 may receive power from the electric power company 10. The electricity reception device 20 may extract an electricity regulation signal from the power supplied by the electric power company 10. The electricity reception device 20 and the electric power company 10 may implement so-called power line communication.

In the present embodiment, the electricity reception device 20 may be integrated with the outdoor unit 30, or may be separate from the outdoor unit 30 and function only to transmit a level signal to the outdoor unit 30. Although not shown, the electricity reception device 20 may include a router, a modem, or the like that extracts an electricity regulation signal from power, without being limited thereto.

The electricity reception device 20 may further include a switching circuit (not shown) to transmit different signals to the air conditioner based on the level of the electricity regulation signal. The switching circuit (not shown) may convert the level of the electricity regulation signal into a level signal that the air conditioner can recognize, and transmit the same to the air conditioner.

The outdoor unit 30 may implement an operation to adjust electricity consumption, and thereafter transmit control information, such as a control instruction for adjustment of electricity consumption to the indoor units 40, thereby enabling reduction of total electricity consumption of the air conditioner. The outdoor unit 30 may first determine an operating direction of the indoor units 40, and thereafter transmit control information, such as a control instruction based on the operating direction to the indoor units 40.

For example, when the outdoor unit 30 receives an electricity regulation signal, the outdoor unit 30 may determine an operation degree of a compressor or whether to power the compressor on or off based on the level of the electricity regulation signal. In addition to adjusting the operation degree of the compressor, the outdoor unit 30 may change the operating direction of the indoor units 40 to adjust total electricity consumption of the air conditioner.

The outdoor unit 30 may equally or differently control the operating direction of the indoor units 40 connected thereto in response to an electricity regulation signal. For example, when it is desired to reduce electricity consumption, the outdoor unit 30 may reduce electricity consumption of all of the indoor units 40 connected thereto, or may differently adjust electricity consumption of the indoor units 40 in consideration of importance of the respective indoor units 40.

Meanwhile, in the case in which the electricity reception device 20 is directly connected to any one indoor unit 40 (more particularly, the electricity reception device is connected to a point denoted by B), the indoor unit 40 may review a method to adjust electricity consumption. For example, the indoor unit 40 may check the level of an electricity regulation signal, and control an operation thereof based on the checked level.

The indoor unit 40 may determine whether or not the indoor unit 40 will be operated or an operating direction thereof via communication with another indoor unit or the outdoor unit 30. For example, when the outdoor unit 30 reduces electricity consumption such that the electricity consumption remains equal to or less than required electricity consumption designated by the electricity regulation signal, the indoor unit 40 may continue normal operation.

When the outdoor unit 30 has difficulty in reducing electricity consumption, each of the indoor units 40 may begin an operation to reduce electricity consumption. Each of the indoor units 40 may receive control information, such as a control instruction transmitted from the outdoor unit 30 or a master indoor unit, thereby determining an operating direction thereof.

In another embodiment, when a difference between current electricity consumption and required electricity consumption designated by the electricity regulation signal is too small to cause the outdoor unit 30 to reduce operation of a compressor, electricity consumption may be adjusted by adjusting a set temperature or a set flow rate of the indoor units 40.

The outdoor unit 30 may adjust electricity consumption of the air conditioner in response to an electricity regulation signal. For example, the outdoor unit 30 may control operation of a compressor (not shown) in response to an electricity regulation signal. Assuming that the air conditioner in accordance with one embodiment of the present invention is adapted to adjust an operation frequency of a compressor using an inverter, the operation frequency of the compressor may be controlled in response to an electricity regulation signal.

The electricity regulation signal may have any one of multiple levels. The outdoor unit 30 may adjust the operation frequency of the compressor based on the level of the electricity regulation signal. As described above, the electricity regulation signal may be assumed as having three levels.

Meanwhile, assuming that the air conditioner in accordance with one embodiment of the present invention is a constant-speed type air conditioner, the air conditioner may power a compressor on or off based on the level of an electricity regulation signal.

The outdoor unit 30 may be connected to the plurality of indoor units 40. The outdoor unit 30 may prioritize the plurality of indoor units 40. The outdoor unit 30 may determine whether or not each of the indoor units 40 will be operated based on the priorities. More particularly, the outdoor unit 30 may determine whether or not each of the indoor units 40 will be operated based on the priorities upon receiving an electricity regulation signal.

### Second Embodiment employing Electricity Reception Device 20 installed to Master Indoor Unit 40

The electricity reception device 20 may be installed to a master indoor unit (more particularly, the electricity reception device is connected to a point denoted by A). In the present embodiment, the electricity reception device 20 may be integrated with the master indoor unit, or may be separate from the master indoor unit and function only to transmit a level signal to the master indoor unit.

The air conditioner of the present embodiment may include a plurality of indoor units 40, and the indoor units 40 may include a master indoor unit and a plurality of indoor slave units connected to the master indoor unit.

The master indoor unit may be directly connected to the outdoor unit 30. The master indoor unit may include or not include the indoor slave units under its command, without being limited thereto. When the master indoor unit is connected to the indoor slave units, the master indoor unit may output a signal to control operation of the indoor slave units.

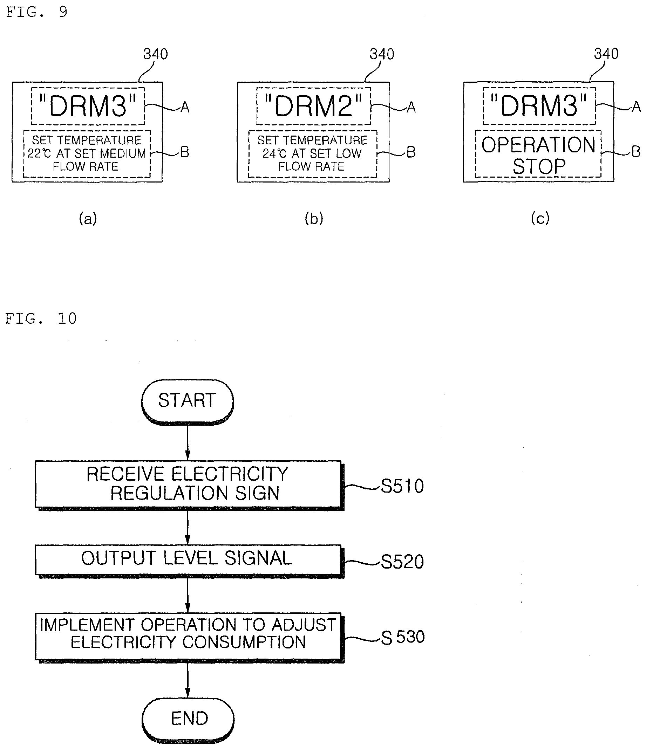

In the present embodiment, when the master indoor unit receives a level signal, the master indoor unit may adjust a set flow rate, i.e. a set amount of air to be discharged from the master indoor unit, or a set temperature, i.e. a set target air conditioning temperature of indoor air acquired by the master indoor unit based on the level of an electricity regulation signal. This will be described below in more detail with reference to FIGS. 9 and 10.

The master indoor unit, which has received the level signal, may control operation of the indoor slave units based on the level of the electricity regulation signal. The master indoor unit may first determine an operating direction of the indoor slaves units, and thereafter transmit control information, such as a control instruction, based on the operating direction to the indoor slave units.

The master indoor unit may individually control operation of at least one indoor slave unit. The master indoor unit may prioritize the plurality of indoor slave units, and determine whether or not each of the indoor slave units will be operated based on the priorities. Here, the number of priorities may coincide with the number of levels of an electricity regulation signal.

Assuming that the master indoor unit defines the first priority, the second priority, and the third priority, a plurality of indoor slave units may correspond to each of the first priority, the second priority, and the third priority. That is, under the provision of the plurality of indoor slave units, two or more indoor slave units may correspond to the first priority, two or more indoor slave units may correspond to the second priority, and two or more indoor slave units may correspond to the third priority, but the number of the indoor slave units is not limited thereto. As occasion demands, only the master indoor unit may be set to the first priority and the indoor slave units may be set to the second priority or below, without being limited thereto.

Explaining the present embodiment in more detail, assuming that three indoor slave units are connected to a master indoor unit and the level of an electricity regulation signal is the first level, the master indoor unit may transmit a power-off signal to all of the indoor slave units and may stop operation thereof.

When the level of an electricity regulation signal is the second level, the master indoor unit may transmit a power-off signal to the other indoor slave units except for an indoor slave unit corresponding to the first priority. For example, when only the master indoor unit corresponds to the first priority, the master indoor unit may power all of the indoor slave units off while continuing operation thereof.

When the level of an electricity regulation signal is the third level, the master indoor unit may transmit a power-off signal to the other indoor slave units except for the master indoor unit corresponding to the first priority and an indoor slave unit corresponding to the second priority. This control operation may vary based on the number of the master indoor unit and the indoor slave units, and thus is not commonly applied to all of the embodiments.

### Third Embodiment employing Electricity Reception Device 20 installed to Indoor Slave Unit 40

The electricity reception device 20 may be installed to any one indoor slave unit (more particularly, the electricity reception device is connected to a point denoted by B). In the present embodiment, the electricity reception device 20 may be integrated with the indoor slave unit, or may be separate from the indoor slave unit and function only to transmit a level signal to the indoor slave unit.

When the electricity reception device 20 is installed to the indoor slave unit, or is adapted to transmit a level signal to the indoor slave unit, the indoor slave unit, which has received a level signal, may adjust a set flow rate, i.e. a set amount of air to be discharged from the indoor slave unit, or a set temperature, i.e. a set target air conditioning temperature of indoor air acquired by the indoor slave unit based on the level of an electricity regulation signal. The present embodiment will be described below in more detail with reference to FIGS. 9 and 10.

The indoor unit 40 in accordance with the embodiment of the present invention includes an expansion valve (not shown) that expands refrigerant supplied from the outdoor unit 30 connected thereto, an indoor heat exchanger that implements heat exchange heat between air and refrigerant, an indoor fan (not shown) that allows indoor air to be introduced into the indoor heat exchanger and heat-exchanged air to be discharged into a room, a plurality of sensors (not shown), and a controller (not shown) that controls operation of the indoor unit 40.

The indoor unit 40 may have a discharge port, through which the heat-exchanged air is discharged, and may further include a flow direction regulator, which opens or closes the discharge port and controls a flow direction of air discharged from the indoor unit 40. The indoor unit 40 may adjust a flow rate of air by controlling revolutions per minute of an indoor unit fan to control suction and discharge of air.

The plurality of indoor units 40 may be individually connected to the remote controller to receive a control signal and be operated in response to the control signal.

Each of the indoor units 40 may implement wireless or wired communication with the remote controller 60. The indoor unit 40 may include a communication module (not shown) to communicate with the remote controller 60 in a wired or wireless manner. When the indoor unit 40 receives a control signal from the remote controller 60, the indoor unit 40 may inform the remote controller 60 of successful reception of the control signal, without being limited thereto.

The indoor unit 40 may transmit a signal indicating an operating state to the remote controller 60. When the indoor unit 40 undergoes variation in terms of On or Off or variation in an operating state thereof, the indoor unit 40 may transmit a signal indicating this variation to the remote controller 60. The indoor unit 40 may communicate with the remote controller 60 upon occurrence of an event or at a constant interval.

The indoor unit 40 may receive an electricity regulation signal from the outdoor unit 30. The indoor unit 40 may adjust a set flow rate, i.e. a set amount of air to be discharged from the indoor unit 40, or a set temperature, i.e. a set target air conditioning temperature of indoor air acquired by the indoor unit 40 based on the level of an electricity regulation signal. For example, the electricity regulation signal may have any one of the first level, the second level, and the third level, and the indoor unit 40 may raise or lower a set flow rate or a set temperature based on the level of the electricity regulation signal.

The indoor unit 40 may store information regarding a regulation criterion of a set flow rate or a set temperature based on the level of an electricity regulation signal. For example, the indoor unit 40 may store a Table that shows a set flow rate or a set temperature based on the level of an electricity regulation signal, but a storage method is not limited thereto.

The indoor unit 40 may transmit an electricity regulation signal to the portable terminal 50 that can read out information. The indoor unit 40 may transmit an electricity regulation signal to the portable terminal 50 to allow a user to easily check an operating state of the air conditioner.

The portable terminal 50 may communicate with the indoor unit 40. The portable terminal 50 may receive an electricity regulation signal from the indoor unit 40. The portable terminal 50 may receive information regarding operation of the air conditioner from the indoor unit 40.

The air conditioner may include the remote controller 60. The remote controller 60 may control the plurality of indoor units 40 respectively. The remote controller 60 may change an operation mode of the indoor unit 40. The operation mode may include a cooling mode, a dehumidification mode, an air purification mode, a heating mode, and the like.

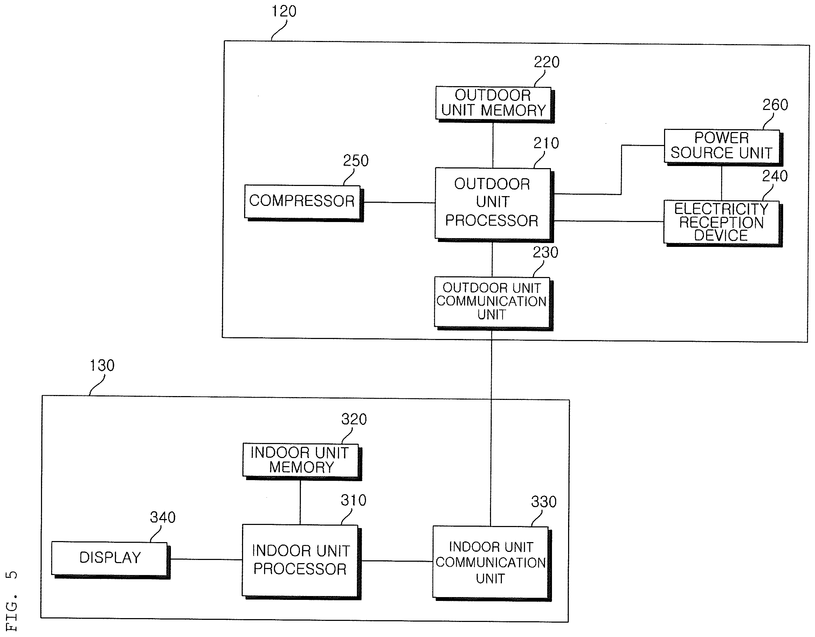

FIG. 5 is a view illustrating configurations of an outdoor unit 120 and an indoor unit 130 included in an air conditioner in accordance with one embodiment of the present invention.

Referring to FIG. 5, the outdoor unit 120 may include a compressor 250 that implements heat exchange of refrigerant delivered from the indoor unit 130, and an outdoor unit processor 210 that controls operation of the compressor 250 in response to an electricity regulation signal.

The processor 210 may implement a variety of functions for the outdoor unit 120, and may execute or implement sets of instructions and/or various software programs stored in an outdoor unit memory 220 for data processing. The outdoor unit processor 210 may process a signal based on information stored in the outdoor unit memory 220.

An electricity reception device 240 may serve to receive power from an external power source, and to extract an electricity regulation signal from the received power, the electricity regulation signal providing information regarding usage of electricity. The electricity reception device 240 may include an electricity device that receives power from an electric power company and extracts an electricity regulation signal from the power, and a switching circuit that converts the electricity regulation signal into a level signal that the air conditioner can recognize.

The electricity device and the switching circuit may be separate from each other, without being limited thereto. For example, the outdoor unit 120 may include the switching circuit of the electricity reception device 240, without being limited thereto. The electricity device may function to supply power to a power source unit 260.

Although FIG. 5 illustrates the electricity reception device 240 as being included in the outdoor unit 120 to allow the outdoor unit processor 210 to directly receive a level signal from the electricity reception device 240, the disclosure is not limited thereto. According to embodiments, the outdoor unit 120 may not include the electricity reception device 240, may receive only a level signal from the electricity reception device 240, or may be not connected to the electricity reception device 240.

The outdoor unit processor 210 may receive a level signal from the electricity reception device 240. The outdoor unit processor 210 may check the level of an electricity regulation signal from the level signal. The outdoor unit processor 210 may control operation of the compressor 250 based on the level of the electricity regulation signal.

The outdoor unit 120 may include the compressor 250 to compress refrigerant. Assuming that the compressor 250 is an inverter type compressor, the outdoor unit processor 210 may adjust an operation frequency of the compressor 250 in response to an electricity regulation signal. Assuming that the compressor 250 is a constant-speed type compressor that continuously compresses refrigerant at a constant speed, the outdoor unit processor 210 may determine whether to power the compressor 250 on or off based on an electricity regulation signal.

When the outdoor unit processor 210 receives a level signal, the outdoor unit processor 210 may check required electricity consumption designated by the electricity regulation signal. For example, the electricity regulation signal may have any one of multiple levels. The outdoor unit processor 210 may check the level of the electricity regulation signal, thereby checking required electricity consumption.

The outdoor unit processor 210 may control an operating state of the air conditioner based on the level of the electricity regulation signal, to conform to the required electricity consumption. For example, the outdoor unit processor 210 may adjust an operation frequency of the compressor 250 based on the required electricity consumption.

The outdoor unit processor 210 may check the level of the electricity regulation signal from the level signal. The outdoor unit processor 210 may check the required electricity consumption based on the level of the electricity regulation signal.

An electricity regulation signal may have any one of multiple levels. The outdoor unit processor 210 may implement a control operation to adjust electricity consumption of the outdoor unit 120 based on the level of an electricity regulation signal. For example, the outdoor unit processor 210 may adjust electricity consumption of the outdoor unit 120 by adjusting an operation frequency of the compressor 250.

The outdoor unit processor 210 may control operation of the compressor 250 in response to an electricity regulation signal. Assuming that the compressor 250 is an inverter type compressor, the outdoor unit processor 210 may adjust electricity consumption by adjusting an operation frequency of the compressor 250 based on the level of an electricity regulation signal.

For example, when the electricity regulation signal has the first level, the outdoor unit processor 210 may power the compressor 250 off. When the electricity regulation signal has the second level, the outdoor unit processor 210 may reduce an operation frequency of the compressor 250 to 50%. When the electricity regulation signal has the third level, the outdoor unit processor 210 may reduce an operation frequency of the compressor 250 to 75%.

When the outdoor unit processor 210 receives an electricity regulation signal, the outdoor unit processor 210 may implement an operation to adjust electricity consumption for a predetermined time. For example, when the outdoor unit processor 210 receives an electricity regulation signal, the outdoor unit processor 210 may implement an operation to adjust electricity consumption for a predetermined time of 30 minutes. After implementing the operation to adjust electricity consumption for the predetermined time, the outdoor unit processor 210 may return to normal operation.

For example, when the electricity regulation signal has the first level, the outdoor unit processor 210 may power the compressor 250 off within at least 60 seconds. When the electricity regulation signal has the second level, the outdoor unit processor 210 may reduce an operation frequency of the compressor 250 to 50% for at least 30 minutes. When the electricity regulation signal has the third level, the outdoor unit processor 210 may reduce an operation frequency of the compressor 250 to 75% for at least 30 minutes.

When the outdoor unit 120 includes the electricity reception device 240 or receives a level signal from the electricity reception device 240, the outdoor unit processor 210 may differently control operation of a plurality of indoor units connected to the outdoor unit 120. The outdoor unit processor 210 may differently control operation of the respective indoor units in response to an electricity regulation signal. The outdoor unit processor 210 may prioritize the plurality of indoor units, and determine whether or not each of the indoor units will be operated based on the priorities.

The outdoor unit processor 210 may adjust the number of indoor units to be operated among the indoor units 130 based on the level of an electricity regulation signal. The outdoor unit processor 210 may increase the number of indoor units 130 to be operated as the level of an electricity regulation signal increases.

The outdoor unit processor 210 may output control information indicating required electricity consumption. The outdoor unit processor 210 may output the control information to an outdoor unit communication unit 230. The control information may include currently required electricity consumption, information regarding an operating state of the compressor 250 of the outdoor unit 120, or an instruction to power the indoor unit 130 on or off. The outdoor unit processor 210 may allow the outdoor unit communication unit 230 to transmit information regarding a current operation frequency of the compressor 250 or information regarding whether or not the compressor 250 is being operated to the indoor unit 130.

For example, when three indoor units 130 are connected to the outdoor unit 120 and the level of an electricity regulation signal is the first level, the outdoor unit processor 210 may transmit a power-off signal to all of the indoor units 130. When the level of an electricity regulation signal is the second level, the outdoor unit processor 210 may transmit a power-off signal to the other indoor units 130 except for the indoor unit 130 corresponding to the first priority. When the level of an electricity regulation signal is the third level, the outdoor unit processor 210 may transmit a power-off signal to the other indoor unit 130 except for the indoor units 130 corresponding respectively to the first priority and the second priority. This control operation may vary based on the number of the indoor units 130, and thus is not commonly applied to all of the embodiments.

The outdoor unit memory 220 may include a high-speed random access memory. The outdoor unit memory 220 may include more than one non-volatile memory, such as a magnetic disc storage device, a flash memory device, or other non-volatile virtual memory devices, without being limited thereto. Alternatively, the outdoor unit memory 220 may include a readable storage medium.

For example, the outdoor unit memory 220 may include an Electronically Erasable and Programmable Read Only Memory (EEPROM), without being limited thereto. The EEPROM may allow recording and elimination of information by the outdoor unit processor 210 during operation of the outdoor unit processor 210. The EEPROM may be a memory device in which stored information remains even when power of the outdoor unit 120 is switched off to stop supply of electricity.

The outdoor unit memory 220 may be linked to the outdoor unit processor 210 to store various programs, data or the like.

The outdoor unit memory 220 may store programs that check the level of an electricity regulation signal and required electricity consumption when the outdoor unit 120 receives a level signal, control an operating state to conform to the required electricity consumption, and output control information for the required electricity consumption to a communication device.

The programs may be used to control operation of the outdoor unit 120 or the indoor units 130. The programs may check required electricity consumption designated by an electricity regulation signal. The programs may adjust an operation frequency of the compressor 250 of the outdoor unit 120 or may control operation of the indoor units 130 based on the required electricity consumption, thereby adjusting electricity consumption of the air conditioner.

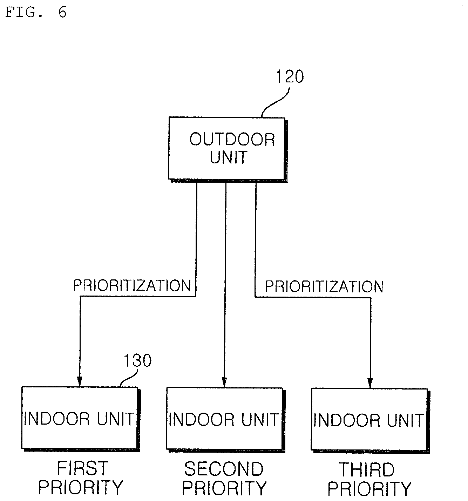

All of the programs may be stored in the indoor unit memory 320 or the outdoor unit memory 220, without being limited thereto. An embodiment in which the programs are stored in the indoor unit memory 320 will be described below in detail with reference to FIG. 6.

The electricity reception device 240 may receive power from an external power source. The electricity reception device 240 may extract an electricity regulation signal from the external power. The electricity reception device 240 may be a receiver for power line communication. The power line communication may mean communication using a signal having a different frequency from that of power to be applied to the electronic appliance.

The electricity reception device 240 may extract an electricity reception signal from power transmitted thereto, and transmit the electricity reception signal to the outdoor unit processor 210. The electricity reception device 240 may transmit the power remaining after extraction of the electricity reception signal to the power source unit 260. The power source unit 260 may convert the power received from the electricity reception device 240 into direct current to supply the same to the outdoor unit processor 210, without being limited thereto.

The outdoor unit communication unit 230 may communicate with the indoor units 130, a portable terminal, or the like upon receiving an instruction from the outdoor unit processor 210. The outdoor unit communication unit 230 may be connected to the outdoor unit processor 210. The outdoor unit communication unit 230 may receive a signal transmitted from the outdoor unit processor 210. The outdoor unit communication unit 230 may transmit a signal generated by the outdoor unit processor 210 to the indoor units 130 or the portable terminal, without being limited thereto. The outdoor unit communication unit 230 may transmit information regarding the electricity regulation signal and an operating manner of the compressor 250 to the indoor units 130.

The outdoor unit communication unit 230 may implement wired/wireless communication. When the outdoor unit communication unit 230 implements wireless communication, the outdoor unit communication unit 230 may include a Radio Frequency (RF) circuit. The outdoor unit communication unit 230 may transmit and receive an RF signal as an electromagnetic signal. The RF circuit may implement interconversion between an electrical signal and an electromagnetic signal, and may communicate with a communication network and other communication devices via the electromagnetic signal.

For example, the RF circuit may include an antenna system, an RF transmitter/receiver, one or more amplifiers, a tuner, one or more oscillators, a digital signal processor, a CODEC chipset, a memory, and the like, without being limited thereto. In addition, the RF circuit may include a known circuit to implement the aforementioned functions.

The outdoor unit 120 in accordance with one embodiment may include the compressor 250 that compresses refrigerant, a compressor motor that drives the compressor 250, an outdoor heat exchanger that radiates heat from the compressed refrigerant, an outdoor blowing unit that consists of an outdoor fan disposed at one side of the outdoor heat exchanger to facilitate radiation of the refrigerant and a motor to rotate the outdoor fan, an expansion device that expands condensed refrigerant, a cooling/heating switching valve that changes a flow path of the compressed refrigerant, and an accumulator that temporarily stores gas-phase refrigerant and supplies constant-pressure refrigerant to the compressor after removal of moisture and impurities from the refrigerant. The outdoor unit 120 may further include a plurality of sensors, valves, and an overcooling device, for example, without being limited thereto.

Referring to FIG. 5 illustrating the indoor unit 130 in block diagram, the indoor unit 130 may include an indoor unit processor 310 that implements a variety of signal processing and calculations, an indoor unit memory 320 that is linked to the indoor unit processor 310 and stores programs, data, or the like, a display 340 that receives a control signal from the indoor unit processor 310 and displays information, and an indoor unit communication unit 330 that may communicate with the outdoor unit 120, and the like.

Although FIG. 5 illustrates a configuration in which the electricity reception device 240 is included in the outdoor unit 120 such that the outdoor unit processor 210 directly receives a level signal from the electricity reception device 240, the disclosure is not limited thereto. In another embodiment, the indoor unit 130 may include an electricity reception device, or may directly receive an electricity regulation signal or a level signal from the electricity reception device.

The indoor unit processor 310 may implement a variety of functions for the indoor unit 130, and may execute or implement sets of instructions and/or various software programs stored in the indoor unit memory 320 for data processing. The indoor unit processor 310 may process a signal based on information stored in the indoor unit memory 320. The indoor unit memory 320 may be linked to the indoor unit processor 310 and store a variety of programs, data, or the like.

According to embodiments, the indoor unit processor 310 may receive a level signal from the outdoor unit 120 or the electricity reception device 240. For example, the indoor unit processor 310 may receive a level signal through the indoor unit communication unit 330, without being limited thereto.

The indoor unit processor 310 may implement various control operations based on a received level signal, electricity reception signal, or control information. The indoor unit processor 310 may control a set temperature or a set flow rate based on the level of an electricity regulation signal. For example, the indoor unit processor 310 may set a temperature closer to an outdoor temperature or may lower a set flow rate as the level of an electricity regulation signal increases.

The indoor unit processor 310 may transmit an electricity regulation signal to the portable terminal via the indoor unit communication unit 330. In another embodiment, the indoor unit processor 310 may transmit an electricity regulation signal to a server via the indoor unit communication unit 330 and allow the portable terminal to receive the electricity regulation signal from the server, but the role of the indoor unit processor 310 is not limited to an intermediary. The indoor unit processor 310 may transmit information regarding a current operating state of the air conditioner to the portable terminal via the indoor unit communication unit 330.

The indoor unit processor 310 may control operation of the indoor unit 130 based on control information. The control information may include information regarding a control instruction of the outdoor unit or the master indoor unit, the level of an electricity regulation signal, required electricity consumption, or an operating state of the compressor of the outdoor unit.

The indoor unit processor 310 may adjust a set flow rate or a set temperature, or may change operation of the respective indoor units upon receiving the control information.

The indoor unit processor 310 may control a set temperature or a set flow rate based on information regarding an operating state of the compressor 250 of the outdoor unit 120. For example, the indoor unit processor 310 may maintain a set temperature or a set flow rate when an operation frequency of the compressor 250 becomes lower than an operation frequency before the outdoor unit 120 receives an electricity regulation signal, without being limited thereto.

For example, when reduction of electricity consumption acquired via reduction in an operation frequency of the compressor 250 of the outdoor unit 120 sufficiently satisfies a requirement of an electricity regulation signal, the indoor unit processor 310 may maintain a set temperature or a set flow rate of the indoor unit 130.

On the other hand, for example, when reduction of electricity consumption acquired via reduction in an operation frequency of the compressor 250 of the outdoor unit 120 does not satisfy a requirement of an electricity regulation signal, the indoor unit processor 310 may control a set temperature of the indoor unit 130 so as to be close to an outdoor temperature, or may reduce a set flow rate of the indoor unit 130.

When the indoor unit processor 310 receives an electricity regulation signal, the indoor unit processor 310 may implement an operation to adjust electricity consumption for a predetermined time. For example, when the indoor unit processor 310 receives an electricity regulation signal, the indoor unit processor 310 may implement an operation to adjust electricity consumption for a predetermined time of 30 minutes. The indoor unit processor 310 may return to normal operation after implementing the operation to adjust electricity consumption for the predetermined time.

Assuming that the indoor unit 130 is a master indoor unit having one or more indoor slave units, the indoor unit processor 310 may implement control of the indoor slave units. For example, the indoor unit processor 310 may adjust a set temperature or a set flow rate of the indoor slave units, or may determine whether or not each indoor slave unit will be operated. The indoor unit processor 310 may prioritize the indoor slave units, and control operation of the indoor slave units based on the priorities.

The indoor memory unit 320 may include a high-speed random access memory. The indoor unit memory 320 may include more than one non-volatile memory, such as a magnetic disc storage device, a flash memory device, or other non-volatile virtual memory devices, without being limited thereto. Alternatively, the indoor unit memory 320 may include a readable storage medium.

The memory 320 of the indoor unit 130 may store programs. The programs may check required electricity consumption by analyzing an electricity regulation signal or a level signal. The programs may check required electricity consumption by checking the level of an electricity regulation signal. The required electricity consumption may vary per regulation of each country.

For example, electricity consumption may be zero when the level of an electricity regulation signal is the first level, may be reduced to 75% when the level of an electricity regulation signal is the second level, and may be reduced to 50% when the level of an electricity regulation signal is the third level, without being limited thereto

The programs may set a flow rate, i.e. a set amount of air to be discharged from the indoor unit 130 or a set target air conditioning temperature of indoor air acquired by the indoor unit 130 based on control information or an electricity regulation signal. The indoor unit memory 320 may store information regarding a regulation criterion of a set flow rate or a set temperature based on the level of an electricity regulation signal.

For example, the indoor unit memory 320 may store information regarding multiple stages of a set flow rate or a set temperature, defined to correspond to multiple levels of an electricity regulation signal.

The indoor unit 130 may include an output device to display information, or an input device to receive information, without being limited thereto. The output device may include a speaker to output sound, or the display 340 to visually display information via emission of light. The input device may include physical buttons, dials, slider switches, clock wheels, and other devices that may receive an external input.

The display 340 may include at least one of a light emitting polymer display, a liquid crystal display, a thin film transistor liquid crystal display, an organic light emitting diode display, a flexible display, and a 3D display, but it will be appreciated that various other displays may be used.

The display 340 may display operating information of the indoor unit 130. For example, the display 340 may display an operating mode, such as a cooling mode, a heating mode, a dehumidification mode, or an air purification mode, and may display an indoor temperature, a flow direction, the presence of an indoor heat source, but items to be displayed are not limited thereto, and broad information required for control may be displayed.

According to embodiments, the display 340 may include a touchscreen that displays visual output to the user to the user and receives tactile input from the user, without being limited thereto.

The display 340 may display an electricity regulation signal and set items that are variable based on the electricity regulation signal. The display 340 may display a set flow rate or a set temperature to be varied by an electricity regulation signal. The display 340 may display that the indoor unit 130 or the outdoor unit 120 is being controlled in response to an electricity regulation signal.

The indoor unit communication unit 330 may be connected to the indoor unit processor 310. The indoor unit communication unit 330 may receive a signal transmitted from the indoor unit processor 310. The indoor unit communication unit 330 may transmit a signal generated by the indoor unit processor 310 to the outdoor unit 120, the remote controller, or the portable terminal, without being limited thereto.

The indoor unit communication unit 330 may receive control information. The control information may include required electricity consumption or information regarding an operating state of the compressor 250 of the outdoor unit 120.

The indoor unit communication unit 330 may transmit an electricity regulation signal to the portable terminal. The indoor unit communication unit 330 may transmit control information changed in response to an electricity regulation signal to the portable terminal. The indoor unit communication unit 330 may receive an electricity regulation signal and a signal indicating an operating state of the compressor 250 from the outdoor unit 120. The indoor unit communication unit 330 may receive a power on/off signal from the outdoor unit 120.

The indoor unit communication unit 330 may be connected to the outdoor unit communication unit 230 in a wired or wireless manner. The indoor unit communication unit 330 may transmit and receive various signals to and from the outdoor unit communication unit 230. The indoor unit communication unit 330 may receive an electricity regulation signal, a level signal, or the like from the outdoor unit communication unit 230.

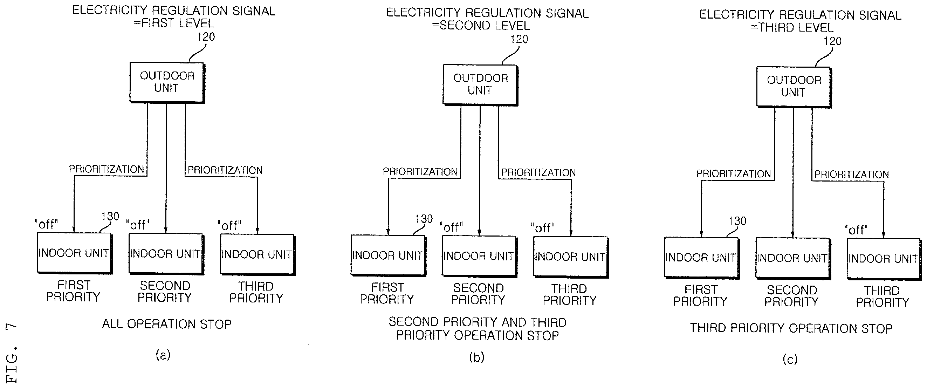

FIGS. 6 and 7 are views illustrating a method of controlling the indoor unit by the outdoor unit of the air conditioner in accordance with one embodiment of the present invention.

Referring to FIGS. 6 and 7, the outdoor unit 120 may prioritize the plurality of indoor units 130 respectively.

The outdoor unit 120 may individually control operation of the plurality of indoor units 130. The outdoor unit 120 may prioritize the plurality of indoor units 130, and determine whether or not each indoor unit 130 will be operated based on the priorities.

Assuming that the outdoor unit 120 defines the first priority, the second priority, and the third priority, a plurality of indoor units 130 may correspond to each of the first priority, the second priority, and the third priority. That is, under the provision of a plurality of indoor units 130, two or more indoor units may correspond to the first priority, two or more indoor units may correspond to the second priority, and two or more indoor units may correspond to the third priority.

Referring to (a) of FIG. 7, when three indoor units 130 are connected to the outdoor unit 120 and the level of an electricity regulation signal is the first level, the processor 210 may transmit a power-off signal to all of the indoor units 130.

Referring to (b) of FIG. 7, when the level of an electricity regulation signal is the second level, the processor 210 may transmit a power-off signal to the other indoor units 130 except for the indoor unit 130 corresponding to the first priority.

Referring to (c) of FIG. 7, when the level of an electricity regulation signal is the third level, the processor 210 may transmit a power-off signal to the other indoor unit 130 except for the indoor units 130 corresponding to the first priority and the second priority. This control operation may vary based on the number of the master indoor unit and the indoor slave units, and thus is not commonly applied to all of the embodiments.

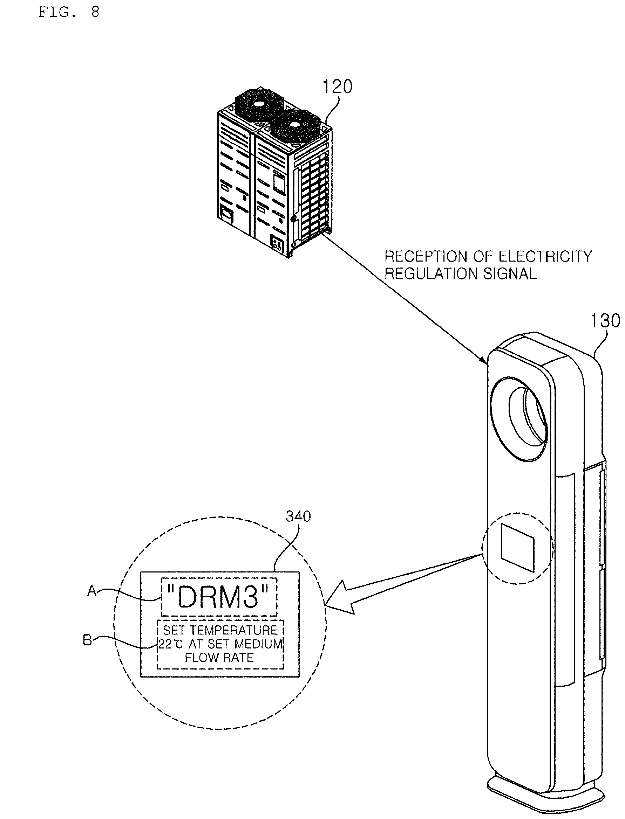

FIGS. 8 and 9 are views illustrating the indoor unit of the air conditioner and a display operation of the indoor unit in accordance with one embodiment of the present invention.

Referring to FIG. 8, the indoor unit 130 may receive an electricity regulation signal from the outdoor unit 120 or an electricity reception device (not shown).

The indoor unit 130 may adjust a set flow rate, i.e. a set amount of air to be discharged from the indoor unit, or a set temperature, i.e. a set target air conditioning temperature of indoor air acquired by the indoor unit based on the level of an electricity regulation signal. The indoor unit 130 may store information regarding a regulation criterion of a set flow rate or a set temperature based on the level of an electricity regulation signal.

The indoor unit 130 may adjust a set flow rate or a set temperature based on information regarding multiple stages of a set flow rate or a set temperature, defined to correspond to multiple levels of an electricity regulation signal.

For example, an electricity regulation signal may have any one of the first level, the second level, or the third level, and the indoor unit 130 may raise or lower a set flow rate or a set temperature based on the level of the electricity regulation signal.

The indoor unit 130 may display various pieces of information on the display 340. The indoor unit 130 may display a set temperature and a set flow rate, denoted by B, and the level of an electricity regulation signal, denoted by A, on the display 340.

The indoor unit 130 may store information regarding a regulation criterion of a set flow rate or a set temperature based on the level of an electricity regulation signal. For example, the indoor unit 130 may store a Table that shows a set flow rate or a set temperature based on the level of an electricity regulation signal, but a storage method is not limited thereto.

For example, referring to (c) of FIG. 7, when the indoor unit 130 implements a cooling operation and the level of an electricity regulation signal is the third level (DRM 3), a set flow rate may be limited to a medium flow rate or less, and a set temperature may be limited to 22°C or more. Referring to (b) of FIG. 7, when the indoor unit 130 implements a cooling operation and the level of an electricity regulation signal is the second level (DRM 2), a set flow rate may be limited to a low flow rate, and a set temperature may be limited to 24°C or more. In addition, referring to (a) of FIG. 7, when the indoor unit 130 implements a cooling operation and the level of an electricity regulation signal is the first level (DRM 1), operation may stop.

As described above, the display 340 of the indoor unit 130 may display the level of an electricity regulation signal, a set temperature, and a set flow rate to allow the user to simultaneously or separately check these items.

The aforementioned control values of the indoor unit 130 per the level of an electricity regulation signal are merely one embodiment for explanation of the present invention, and may vary according to embodiments.

Although FIGS. 8 and 9 show the level of an electricity regulation signal denoted by "DRM", this is merely one embodiment, and display methods or devices are not limited to the description and illustration.

FIG. 10 is a flowchart illustrating a control method of an air conditioner in accordance with one embodiment of the present invention.

Referring to FIG. 10, a control method of an air conditioner in accordance with one embodiment may include receiving an electricity regulation signal that provides information regarding usage of electricity (S510), outputting a level signal indicating the level of the electricity regulation signal (S520), and implementing an operation, by an outdoor unit or an indoor unit, to adjust electricity consumption thereof and electricity consumption of the indoor unit or the outdoor unit connected thereto based on the level of the electricity regulation signal (S530).

Upon reception of the electricity regulation signal (S510), the air conditioner may receive the electricity regulation signal from an electricity reception device. For example, the outdoor unit or the indoor unit of the air conditioner may receive the electricity regulation signal from the electricity reception device. The electricity reception device may be installed to the outdoor unit or the indoor unit, or may be a separate component.

Power supplied by an electric power company may include an electricity regulation signal having a different frequency from that of the power. The electricity reception device may extract the electricity regulation signal from the power.

Upon output of the level signal indicating the level of the electricity regulation signal (S520), the electricity reception device may transmit the level signal indicating the level of the electricity regulation signal to the outdoor unit or the indoor unit.

A processor of the outdoor unit or the indoor unit may check required electricity consumption by checking the level of the electricity regulation signal. The required electricity consumption may indicate a requirement for reduction of electricity consumption in percent, or a requirement for reduction of electricity consumption to a given value or less, without being limited thereto.

Based on the level of the electricity regulation signal, an outdoor unit or an indoor unit of the air conditioner may implement an operation to adjust electricity consumption thereof, and electricity consumption of the indoor unit or the outdoor unit connected thereto.

For example, when an object that receives an electricity regulation signal is an outdoor unit of the air conditioner and the outdoor unit has an inverter type compressor, the outdoor unit may adjust an operation frequency of the compressor in response to the electricity regulation signal. Upon implementation of the operation (S530), when the outdoor unit includes a constant-speed type compressor that continuously compresses refrigerant at a constant speed, whether to power the compressor on or off may be determined in response to the electricity regulation signal.

The electricity regulation signal may have any one of multiple levels. Upon implementation of the operation (S530), an operation frequency of the compressor may be adjusted based on required electricity consumption. For example, when the outdoor unit includes an inverter type compressor, the processor of the outdoor unit may adjust an operation frequency of the compressor based on the required electricity consumption, thereby adjusting electricity consumption of the air conditioner.

The electricity regulation signal may have any one of multiple levels. Upon implementation of the operation (S530), when an object that receives an electricity regulation signal is the outdoor unit, an operation frequency of the compressor may be adjusted based on the level of the electricity regulation signal. For example, when the electricity regulation signal has the first level, the processor of the outdoor unit may power the compressor off. When the electricity regulation signal has the second level, the processor of the outdoor unit may reduce an operation frequency of the compressor to 50%. When the electricity regulation signal has the third level, the processor of the outdoor unit may reduce an operation frequency of the compressor to 75%.

Upon implementation of the operation (S530), the outdoor unit or the indoor unit may return to normal operation after implementing the operation to adjust electricity consumption for the predetermined time.

The outdoor unit may prioritize a plurality of indoor units. Upon implementation of the operation (S530), the outdoor unit may determine whether or not each of the indoor units will be operated based on the priorities. Control information may include information regarding the priorities in terms of operation of the indoor units determined by the outdoor unit.

The electricity regulation signal may have any one of multiple levels. The outdoor unit may differently control operation of the respective indoor units. The number of indoor units to be operated among the plurality of indoor units may be determined based on the level of the electricity regulation signal.

When three indoor units are connected to the outdoor unit and the level of an electricity regulation signal is the first level, the processor of the outdoor unit may transmit a signal to power all of the indoor units off.

When the level of an electricity regulation signal is the second level, the processor of the outdoor unit may transmit a power-off signal to the other indoor units except for the indoor unit corresponding to the first priority. When the level of an electricity regulation signal is the third level, the processor of the outdoor unit may transmit a power-off signal to the other indoor unit except for the indoor units corresponding to the first priority and the second priority. This control operation may vary based on the number of indoor units, and is not commonly applied to all embodiments.

Upon implementation of the operation S530, operation of the indoor units may be controlled based on control information. For example, the outdoor unit or a master indoor unit may output control information to control the indoor units connected thereto.

When a subject that outputs control information is the outdoor unit, the outdoor unit may provide the indoor units with information regarding a current operating state of the compressor, and the indoor units may check an amount of electricity that must be additionally reduced at present.

Each of the indoor unit may adjust a set flow rate, i.e. a set amount of air to be discharged from the indoor unit, or a set temperature, i.e. a set target air conditioning temperature of indoor air acquired by the indoor unit based on control information.

The indoor unit may control a set flow rate or a set temperature based on information regarding multiple stages of a set flow rate or a set temperature corresponding to multiple levels of an electricity regulation signal.

For example, when the indoor unit implements a cooling operation and the level of an electricity regulation signal is the third level, a set flow rate may be limited to a medium flow rate or less, and a set temperature may be limited to 22°C or more. When the indoor unit implements a cooling operation and the level of an electricity regulation signal is the second level, a set flow rate may be limited to a low flow rate, and a set temperature may be limited to 24°C or more. In addition, when the indoor unit 130 implements a cooling operation and the level of an electricity regulation signal is the first level, operation may stop.

Whether or not each indoor unit will be operated may be determined based on control information. Each of a plurality of indoor units may be differently operated in response to an electricity regulation signal. Thus, each of the plurality of indoor units may be operated or may not be operated based on information regarding whether or not each indoor unit will be operated, this information being determined by the outdoor unit. In addition, an operation degree of each indoor unit may be determined based on control information.

For example, assuming that the outdoor unit includes a constant-speed type compressor, the air conditioner may adjust electricity consumption by adjusting a set temperature or a set flow rate of each indoor unit. The outdoor unit or the indoor unit, which receives an electricity regulation signal, may have different operating directions based on total electricity consumption of a plurality of outdoor units and a plurality of indoor units connected to one another.

Upon implementation of the operation (S530), the outdoor unit or the indoor unit, which receives a level signal or an electricity regulation signal, may adjust electricity consumption thereof by controlling rotation of a fan.

Upon implementation of the operation (S530), a plurality of indoor units may include a master indoor unit and a plurality of indoor slave units connected to the master indoor unit. When the master indoor unit receives a level signal or an electricity regulation signal, the master indoor unit may control operation of the plurality of indoor slave units based on the level of an electricity regulation signal.

Although not shown, the control method of the air conditioner in accordance with one embodiment may further include transmitting the electricity regulation signal to a portable terminal that can read out information. The indoor units may transmit the electricity regulation signal to the portable terminal that can read out information. As the indoor units transmit the electricity regulation signal to the portable terminal, the user may easily check an operating state of the air conditioner.

As is apparent from the above description, according to one embodiment of the present invention, an air conditioner may adjust electricity consumption in response to an electricity regulation signal received from an electric power company or the like, which eliminates the need for additional user control.

According to one embodiment of the present invention, the air conditioner may easily adjust electricity consumption by adjusting an operation frequency of a compressor in response to an electricity regulation signal.

In the air conditioner according to one embodiment of the present invention, as a set temperature or a set flow rate of each indoor unit is adjusted in response to an electricity regulation signal, which allows both an outdoor unit and an indoor unit to implement efficient adjustment of electricity consumption in response to an electricity regulation signal.

The air conditioner according to one embodiment of the present invention may include an electricity reception device to output a level signal indicating the level of an electricity regulation signal, and the electricity reception device may be easily applied to various outdoor units or indoor units.

In the air conditioner according to one embodiment of the present invention, regardless of whether the electricity reception device to output a level signal is applied to the outdoor unit or the indoor unit, it is possible to assist the outdoor unit or the indoor unit in optimally implementing an operation to adjust electricity consumption.

Although all elements constituting the embodiments of the present invention are described to be integrated into a single one or to be operated as a single one, the present invention is not necessarily limited to such embodiments. According to embodiments, all of the elements may be selectively integrated into one or more and be operated as one or more within the object and the scope of the present invention as defined by the appended claims.

Each of the elements may be implemented as independent hardware. Alternatively, some or all of the elements may be selectively combined into a computer program having a program module performing some or all functions combined in one or more pieces of hardware.

A plurality of codes and code segments constituting the computer program may be easily reasoned by those skilled in the art to which the present invention pertains. The computer program may be stored in a computer readable media such that the computer program is read and executed by a computer to implement embodiments of the present invention. Computer program storage media may include magnetic recording media, optical recording media, and carrier wave media.

The term "comprises", "includes", or "has" described herein should be interpreted not to exclude other elements but to further include such other elements since the corresponding elements may be inherent unless mentioned otherwise.

All terms including technical or scientific terms have the same meanings as generally understood by a person having ordinary skill in the art to which the present invention pertains unless mentioned otherwise.

Generally used terms, such as terms defined in a dictionary, should be interpreted to coincide with meanings of the related art from the context. Unless obviously defined in the present invention, such terms are not interpreted as ideal or excessively formal meanings.

## Claims

1. An air conditioner comprising:
an outdoor unit (30, 120, 400) configured to implement heat exchange of refrigerant;
at least one indoor unit (40, 130, 200) configured to implement exchange of refrigerant with the outdoor unit (30, 120, 400) and to implement air conditioning of indoor air; and
an electricity reception device (20, 240) configured to receive an electricity regulation signal indicating a level with regard to electricity usage and to transmit a level signal indicating the level of the electricity regulation signal to the outdoor unit (30, 120, 400) or the indoor unit (40, 130, 200),
wherein the outdoor unit (30, 120, 400) or the indoor unit (40, 130, 200) checks required electricity consumption from the level signal upon receiving the level signal, and controls an operating state thereof to conform to the required electricity consumption,
wherein the electricity reception device (20, 240) receives power from an external power source and extracts the electricity regulation signal from the received power.

2. The air conditioner according to claim 1, wherein the electricity reception device (20, 240) includes a switching circuit configured to output different signals based on the level of the electricity regulation signal.

3. The air conditioner according to claim 1 or 2, wherein the outdoor unit (30, 120, 400) includes a compressor (250, 410) having an inverter configured to adjust an operation frequency, and
wherein the outdoor unit (30, 120, 400) is configured to control an operation frequency of the compressor (250, 410) based on the level of the electricity regulation signal.

4. The air conditioner according to claim 3, wherein the level of the electricity regulation signal is any one of the first level, the second level, and the third level,
wherein the outdoor unit (30, 120, 400) is configured to stop operation of the compressor (250, 410) when the level of the electricity regulation signal is the first level,
wherein the outdoor unit (30, 120, 400) is configured to change the operation frequency of the compressor (250, 410) to 50% when the level of the electricity regulation signal is the second level, and
wherein the outdoor unit (30, 120, 400) is configured to change the operation frequency of the compressor (250, 410) to 75% when the level of the electricity regulation signal is the third level.

5. The air conditioner according to claim 1, wherein the outdoor unit (30, 120, 400) or the indoor unit (40, 130, 200) implements an operation to control an operating degree of a blowing fan (240; 430) of the outdoor unit (30, 120, 400) or the indoor unit (40, 130, 200) based on the level of the electricity regulation signal upon receiving the level signal.

6. The air conditioner according to claim 1, wherein, when the outdoor unit (30, 120, 400), connected to a plurality of indoor units (40, 130, 200), receives the level signal, the outdoor unit (30, 120, 400) is configured to differently control an operating state of each of the plurality of indoor units (40, 130, 200) based on the level of the electricity regulation signal.

7. The air conditioner according to claim 6, wherein the outdoor unit (30, 120, 400) is configured to determine whether or not each of the plurality of indoor units (40, 130, 200) will be operated based on the priorities of the indoor units (40, 130, 200).

8. The air conditioner according to claim 1, wherein, when the indoor unit (40, 130, 200) receives the level signal, the indoor unit (40, 130, 200) is configured to adjust a set flow rate or a set temperature based on the level of the electricity regulation signal, the set flow rate being a set amount of air to be discharged from the indoor unit (40, 130, 200), and the set temperature being a set target air conditioning temperature of indoor air.

9. The air conditioner according to any one of claims 1 to 8, wherein the at least one indoor unit (40, 130, 200) includes a plurality of indoor units (40, 130, 200),
wherein the plurality of indoor units (40, 130, 200) includes a master indoor unit and a plurality of indoor slave units connected to the master indoor unit, and
wherein the master indoor unit is configured to differently control operation of the respective indoor slave units based on the level of the electricity regulation signal upon receiving the level signal.

10. The air conditioner according to claim 9, wherein the outdoor unit (30, 120, 400) or the indoor unit (40, 130, 200) implements an operation to adjust electricity consumption for a predetermined time, and then returns to normal operation.

11. A control method of an air conditioner, comprising:
receiving (S510) an electricity regulation signal indicating a level with regard to electricity usage;
outputting (S520) a level signal indicating the level of the electricity regulation signal; and
implementing (S530) an operation, by an indoor unit (40, 130, 200) or an outdoor unit (30, 120, 400), to adjust electricity consumption thereof and electricity consumption of the outdoor unit or the indoor unit connected thereto based on the level of the electricity regulation signal,
wherein an electricity reception device (20, 240) receives power from an external power source, and
wherein the electricity regulation signal is extracted from the received power, by the electricity reception device (20, 240).

12. The control method according to claim 11, wherein, upon implementation of the operation, the outdoor unit (30, 120, 400) or the indoor unit (40, 130, 200), which has received the level signal, implements an operation to control an operating degree of a blowing fan (240; 430).

13. The control method according to claim 11 or 12, wherein implementation of the operation includes controlling operation of a compressor (250, 410), configured to compress refrigerant, based on the level of the electricity regulation signal,
wherein the compressor (250, 410) includes an inverter configured to adjust an operation frequency, and
wherein implementation of the operation includes controlling the operation frequency of the compressor (250, 410) based on the level of the electricity regulation signal.

14. The control method according to claim 11, 12, or 13, wherein implementation of the operation includes checking required electricity consumption from the level signal.

15. The control method according to any one of claims 11 to 14, wherein, upon implementation of the operation, the indoor unit (40, 130, 200), which has received the level signal, adjusts a set flow rate or a set temperature based on the level of the electricity regulation signal, the set flow rate being a set amount of air to be discharged from the indoor unit (40, 130, 200), and the set temperature being a set target air conditioning temperature of indoor air.

16. The control method according to any one of claims 11 to 15, wherein the outdoor unit (30, 120, 400), which has received the level signal, is connected to a plurality of indoor units (40, 130, 200), and
wherein, upon implementation of the operation, the outdoor unit (30, 120, 400) differently controls an operating state of each of the plurality of indoor units (40, 130, 200) based on required electricity consumption checked from the level signal.

17. The control method according to any one of claims 11 to 16, wherein, upon implementation of the operation, the outdoor unit (30, 120, 400) prioritizes a plurality of indoor units (40, 130, 200) respectively, and determines whether or not each of the plurality of indoor units (40, 130, 200) will be operated based on the priorities.

18. The control method according to any one of claims 11 to 16, wherein, upon implementation of the operation, the indoor unit (40, 130, 200) adjusts a set flow rate or a set temperature based on the level of the electricity regulation signal, the set flow rate being a set amount of air to be discharged from the indoor unit, and the set temperature being a set target air conditioning temperature of indoor air.

19. The control method according to any one of claims 11 to 18, wherein a plurality of indoor units (40, 130, 200) is provided,
wherein, upon implementation of the operation, the plurality of indoor units (40, 130, 200) includes a master indoor unit and a plurality of indoor slave units connected to the master indoor unit, and
wherein the master indoor unit differently controls operation of the respective indoor slave units based on the level of the electricity regulation signal upon receiving the level signal.

20. The control method according to any one of claims 11 to 19, wherein, upon implementation of the operation, the outdoor unit (30, 120, 400) or the indoor unit (40, 130, 200) implements an operation to adjust electricity consumption for a predetermined time, and then returns to normal operation.

## Patentansprüche

1. Klimaanlage, die aufweist:
eine Außeneinheit (30, 120, 400), die konfiguriert ist, einen Wärmetausch eines Kältemittels durchzuführen;
mindestens eine Inneneinheit (40, 130, 200), die konfiguriert ist, einen Austausch des Kältemittels mit der Außeneinheit (30, 120, 400) durchzuführen und eine Klimatisierung von Innenluft durchzuführen; und
eine Elektrizitätsaufnahmevorrichtung (20, 240), die konfiguriert ist, ein Elektrizitätsregelsignal zu empfangen, das einen Pegel hinsichtlich einer Elektrizitätsnutzung anzeigt, und ein Pegelsignal, das den Pegel des Elektrizitätsregelsignals anzeigt, an die Außeneinheit (30, 120, 400) oder die Inneneinheit (40, 130, 200) zu senden,
wobei die Außeneinheit (30, 120, 400) oder die Inneneinheit (40, 130, 200) beim Empfang des Pegelsignals den erforderlichen Elektrizitätsverbrauch aus dem Pegelsignal ermittelt, und deren Betriebszustand so steuert, dass er mit dem erforderlichen Elektrizitätsverbrauch übereinstimmt,
wobei die Elektrizitätsaufnahmevorrichtung (20, 240) Strom aus einer externen Stromquelle empfängt und das Elektrizitätsregelsignal aus dem empfangenen Strom extrahiert.

2. Klimaanlage nach Anspruch 1, wobei die Elektrizitätsaufnahmevorrichtung (20, 240) einen Schaltkreis aufweist, der konfiguriert ist, beruhend auf dem Pegel des Elektrizitätsregelsignals unterschiedliche Signale abzugeben.

3. Klimaanlage nach Anspruch 1 oder 2, wobei die Außeneinheit (30, 120, 400) einen Verdichter (250, 410) aufweist, der einen Inverter aufweist, der konfiguriert ist, eine Betriebsfrequenz einzustellen, und
wobei die Außeneinheit (30, 120, 400) konfiguriert ist, eine Betriebsfrequenz des Verdichters (250, 410) beruhend auf dem Pegel des Elektrizitätsregelsignals zu steuern.

4. Klimaanlage nach Anspruch 3, wobei der Pegel des Elektrizitätsregelsignals irgendeiner des ersten Pegels, des zweiten Pegels und des dritten Pegels ist,
wobei die Außeneinheit (30, 120, 400) konfiguriert ist, den Betrieb des Verdichters (250, 410) zu stoppen, wenn der Pegel des Elektrizitätsregelsignals der erste Pegel ist,
wobei die Außeneinheit (30, 120, 400) konfiguriert ist, die Betriebsfrequenz des Verdichters (250, 410) auf 50% zu ändern, wenn der Pegel des Elektrizitätsregelsignals der zweite Pegel ist, und
wobei die Außeneinheit (30, 120, 400) konfiguriert ist, die Betriebsfrequenz des Verdichters (250, 410) auf 75% zu ändern, wenn der Pegel des Elektrizitätsregelsignals der dritte Pegel ist.

5. Klimaanlage nach Anspruch 1, wobei die Außeneinheit (30, 120, 400) oder die Inneneinheit (40, 130, 200) einen Betrieb durchführt, um einen Betriebsgrad eines blasenden Ventilators (240; 430) der Außeneinheit (30, 120, 400) oder der Inneneinheit (40, 130, 200) beim Empfang des Pegelsignals beruhend auf dem Pegel des Elektrizitätsregelsignals zu steuern.

6. Klimaanlage nach Anspruch 1, wobei, wenn die Außeneinheit (30, 120, 400), die mit einer Vielzahl von Inneneinheiten (40, 130, 200) verbunden ist, das Pegelsignal empfängt, die Außeneinheit (30, 120, 400) konfiguriert ist, einen Betriebszustand von jeder der Vielzahl der Inneneinheiten (40, 130, 200) beruhend auf dem Pegel des Elektrizitätsregelsignals unterschiedlich zu steuern.

7. Klimaanlage nach Anspruch 6, wobei die Außeneinheit (30, 120, 400) konfiguriert ist, festzustellen, ob jede der Vielzahl der Inneneinheiten (40, 130, 200) beruhend auf den Prioritäten der Inneneinheiten (40, 130, 200) betrieben wird.

8. Klimaanlage nach Anspruch 1, wobei, wenn die Inneneinheit (40, 130, 200) das Pegelsignal empfängt, die Inneneinheit (40, 130, 200) konfiguriert ist, einen Solldurchsatz oder eine Solltemperatur beruhend auf dem Pegel des Elektrizitätsregelsignals einzustellen, wobei der Solldurchsatz eine Sollluftmenge ist, die aus der Inneneinheit (40, 130, 200) ausgestoßen werden soll, und wobei die Solltemperatur eine Sollklimatisierungstemperatur der Innenluft ist.

9. Klimaanlage nach einem der Ansprüche 1 bis 8, wobei die mindestens eine Inneneinheit (40, 130, 200) eine Vielzahl von Inneneinheiten (40, 130, 200) aufweist,
wobei die Vielzahl der Inneneinheiten (40, 130, 200) eine Hauptinneneinheit und eine Vielzahl von Nebeninneneinheiten aufweist, die mit der Hauptinneneinheit verbunden sind, und
wobei die Hauptinneneinheit konfiguriert ist, den Betrieb der jeweiligen Nebeninneneinheiten beim Empfang des Pegelsignals beruhend auf dem Pegel des Elektrizitätsregelsignals unterschiedlich zu steuern.

10. Klimaanlage nach Anspruch 9, wobei die Außeneinheit (30, 120, 400) oder die Inneneinheit (40, 130, 200) einen Betrieb durchführt, den Elektrizitätsverbrauch für eine vorgegebene Zeit einzustellen, und dann zum Normalbetrieb zurückzukehrt.

11. Steuerverfahren einer Klimaanlage, das aufweist:
Empfangen (S510) eines Elektrizitätsregelsignals, das einen Pegel hinsichtlich einer Elektrizitätsnutzung anzeigt;
Ausgeben (S520) eines Pegelsignals, das den Pegel des Elektrizitätsregelsignals anzeigt; und
Durchführen (S530) eines Betriebs durch eine Inneneinheit (40, 130, 200) oder eine Außeneinheit (30, 120, 400), um deren Elektrizitätsverbrauch und den Elektrizitätsverbrauch der damit verbundenen Außeneinheit oder die Inneneinheit beruhend auf dem Pegel des Elektrizitätsregelsignals einzustellen,
wobei eine Elektrizitätsaufnahmevorrichtung (20, 240) Strom aus einer externen Stromquelle empfängt, und
wobei das Elektrizitätsregelsignal durch die Elektrizitätsaufnahmevorrichtung (20, 240) aus dem empfangenen Strom extrahiert wird.

12. Steuerverfahren nach Anspruch 11, wobei bei der Ausführung des Betriebs die Außeneinheit (30, 120, 400) oder die Inneneinheit (40, 130, 200), die das Pegelsignal empfangen hat, einen Betrieb durchführt, einen Betriebsgrad eines blasenden Ventilators (240; 430) zu steuern.

13. Steuerverfahren nach Anspruch 11 oder 12, wobei die Ausführung des Betriebs das Steuern des Betriebs eines Verdichters (250, 410), der konfiguriert ist, ein Kältemittel zu verdichten, beruhend auf dem Pegel des Elektrizitätsregelsignals aufweist,
wobei der Verdichter (250, 410) einen Inverter aufweist, der konfiguriert ist, eine Betriebsfrequenz einzustellen, und
wobei die Ausführung des Betriebs das Steuern der Betriebsfrequenz des Verdichters (250, 410) beruhend auf dem Pegel des Elektrizitätsregelsignals aufweist.

14. Steuerverfahren nach Anspruch 11, 12, oder 13, wobei die Ausführung des Betriebs das Ermitteln des erforderlichen Elektrizitätsverbrauchs aus dem Pegelsignal aufweist.

15. Steuerverfahren nach einem der Ansprüche 11 bis 14, wobei bei der Ausführung des Betriebs die Inneneinheit (40, 130, 200), die das Pegelsignal empfangen hat, einen Solldurchsatz oder eine Solltemperatur beruhend auf dem Pegel des Elektrizitätsregelsignals einstellt, wobei der Solldurchsatz eine Sollluftmenge ist, die aus der Inneneinheit (40, 130, 200) ausgestoßen werden soll, und wobei die Solltemperatur eine Sollklimatisierungstemperatur der Innenluft ist.

16. Steuerverfahren nach einem der Ansprüche 11 bis 15, wobei die Außeneinheit (30, 120, 400), die das Pegelsignal empfangen hat, mit einer Vielzahl von Inneneinheiten (40, 130, 200) verbunden ist, und
wobei bei der Ausführung des Betriebs die Außeneinheit (30, 120, 400) einen Betriebszustand von jeder der Vielzahl der Inneneinheiten (40, 130, 200) beruhend auf dem erforderlichen Elektrizitätsverbrauch unterschiedlich steuert, der aus dem Pegelsignal ermittelt wird.

17. Steuerverfahren nach einem der Ansprüche 11 bis 16, wobei bei der Ausführung des Betriebs die Außeneinheit (30, 120, 400) jeweils eine Vielzahl von Inneneinheiten (40, 130, 200) priorisiert und feststellt, ob jede der Vielzahl der Inneneinheiten (40, 130, 200) beruhend auf den Prioritäten betrieben wird.

18. Steuerverfahren nach einem der Ansprüche 11 bis 16, wobei bei der Ausführung des Betriebs die Inneneinheit (40, 130, 200) einen Solldurchsatz oder eine Solltemperatur beruhend auf dem Pegel des Elektrizitätsregelsignals einstellt, wobei der Solldurchsatz eine Sollluftmenge ist, die aus der Inneneinheit ausgestoßen werden soll, und wobei die Solltemperatur eine Sollklimatisierungstemperatur der Innenluft ist.

19. Steuerverfahren nach einem der Ansprüche 11 bis 18, wobei eine Vielzahl von Inneneinheiten (40, 130, 200) vorgesehen ist,
wobei bei der Ausführung des Betriebs die Vielzahl der Inneneinheiten (40, 130, 200) eine Hauptinneneinheit und eine Vielzahl von Nebeninneneinheiten aufweist, die mit der Hauptinneneinheit verbunden sind, und
wobei die Hauptinneneinheit den Betrieb der jeweiligen Nebeninneneinheiten beim Empfang des Pegelsignals beruhend auf dem Pegel des Elektrizitätsregelsignals unterschiedlich steuert.

20. Steuerverfahren nach einem der Ansprüche 11 bis 19, wobei bei der Ausführung des Betriebs die Außeneinheit (30, 120, 400) oder die Inneneinheit (40, 130, 200) einen Betrieb durchführt, einen Elektrizitätsverbrauch für eine vorgegebene Zeit einzustellen, und dann zum Normalbetrieb zurückkehrt.

## Revendications

1. Climatiseur comprenant :
une unité extérieure (30, 120, 400) prévue pour réaliser un échange de chaleur avec un fluide frigorigène ;
au moins une unité intérieure (40, 130, 200) prévue pour réaliser un échange de fluide frigorigène avec l'unité extérieure (30, 120, 400) et pour réaliser une climatisation de l'air intérieur ; et
un dispositif de réception électrique (20, 240) prévu pour recevoir un signal de régulation électrique indiquant un niveau de consommation électrique et pour transmettre un signal de niveau indiquant le niveau du signal de régulation électrique à l'unité extérieure (30, 120, 400) ou à l'unité intérieure (40, 130, 200),
où l'unité extérieure (30, 120, 400) ou l'unité intérieure (40, 130, 200) contrôlent la consommation d'électricité exigée à partir du signal de niveau en recevant le signal de niveau, et commandent un état de fonctionnement du climatiseur en conformité avec la consommation d'électricité exigée,
où le dispositif de réception électrique (20, 240) reçoit du courant d'une source de courant extérieure et extrait le signal de régulation électrique du courant reçu.

2. Climatiseur selon la revendication 1, où le dispositif de réception électrique (20, 240) comprend un circuit de commutation prévu pour émettre différents signaux sur la base du niveau du signal de régulation électrique.

3. Climatiseur selon la revendication 1 ou la revendication 2, où l'unité extérieure (30, 120, 400) comprend un compresseur (250, 410) pourvu d'un onduleur prévu pour régler une fréquence de fonctionnement, et
où l'unité extérieure (30, 120, 400) est prévue pour commander une fréquence de fonctionnement du compresseur (250, 410) sur la base du niveau du signal de régulation électrique.

4. Climatiseur selon la revendication 3, où le niveau du signal de régulation électrique est soit le premier niveau, soit le deuxième niveau, soit le troisième niveau,
où l'unité extérieure (30, 120, 400) est prévue pour arrêter le fonctionnement du compresseur (250, 410) si le niveau du signal de régulation électrique est le premier niveau, où l'unité extérieure (30, 120, 400) est prévue pour modifier la fréquence de fonctionnement du compresseur (250, 410) à 50 % si le niveau du signal de régulation électrique est le deuxième niveau, et
où l'unité extérieure (30, 120, 400) est prévue pour modifier la fréquence de fonctionnement du compresseur (250, 410) à 75 % si le niveau du signal de régulation électrique est le troisième niveau.

5. Climatiseur selon la revendication 1, où l'unité extérieure (30, 120, 400) ou l'unité intérieure (40, 130, 200) implémentent un fonctionnement pour commander un degré de fonctionnement d'un ventilateur (240 ; 430) de l'unité extérieure (30, 120, 400) ou de l'unité intérieure (40, 130, 200) sur la base du niveau du signal de régulation électrique en recevant le signal de niveau.

6. Climatiseur selon la revendication 1, où, à la réception du signal de niveau par l'unité extérieure (30, 120, 400) reliée à une pluralité d'unités intérieures (40, 130, 200), l'unité extérieure (30, 120, 400) est prévue pour commander de manière différenciée un état de fonctionnement de chaque unité de la pluralité d'unités intérieures (40, 130, 200) sur la base du niveau du signal de régulation électrique.

7. Climatiseur selon la revendication 6, où l'unité extérieure (30, 120, 400) est prévue pour déterminer si chaque unité de la pluralité d'unités intérieures (40, 130, 200) doit être mise en service ou non sur la base des priorités des unités intérieures (40, 130, 200).

8. Climatiseur selon la revendication 1, où, à la réception du signal de niveau par l'unité intérieure (40, 130, 200), l'unité intérieure (40, 130, 200) est prévue pour régler un débit défini ou une température définie sur la base du niveau du signal de régulation électrique, le débit défini étant une quantité d'air définie à refouler par l'unité intérieure (40, 130, 200), et la température définie étant une température de climatisation de consigne définie de l'air intérieur.

9. Climatiseur selon l'une des revendications 1 à 8, où ladite au moins une unité intérieure (40, 130, 200) comprend une pluralité d'unités intérieures (40, 130, 200),
où la pluralité d'unités intérieures (40, 130, 200) comprend une unité intérieure maître et une pluralité d'unités intérieures esclaves reliées à l'unité intérieure maître, et
où l'unité intérieure maître est prévue pour commander de manière différenciée le fonctionnement des unités intérieures esclaves respectives sur la base du niveau du signal de régulation électrique en recevant le signal de niveau.

10. Climatiseur selon la revendication 9, où l'unité extérieure (30, 120, 400) ou l'unité intérieure (40, 130, 200) implémentent un fonctionnement pour régler une consommation d'électricité pendant une durée déterminée, avant retour au fonctionnement normal.

11. Procédé de commande d'un climatiseur, comprenant :
la réception (S510) d'un signal de régulation électrique indiquant un niveau de consommation électrique ;
l'émission (S520) d'un signal de niveau indiquant le niveau du signal de régulation électrique ; et
l'implémentation (S530) d'un fonctionnement par une unité intérieure (40, 130, 200) ou une unité extérieure (30, 120, 400), pour régler la consommation d'électricité du climatiseur et la consommation d'électricité de l'unité extérieure ou de l'unité intérieure raccordées sur la base du niveau du signal de régulation électrique,
où un dispositif de réception électrique (20, 240) reçoit du courant d'une source de courant extérieure, et
où le signal de régulation électrique est extrait du courant reçu par le dispositif de réception électrique (20, 240).

12. Procédé de commande selon la revendication 11, où, par implémentation de fonctionnement, l'unité extérieure (30, 120, 400) ou l'unité intérieure (40, 130, 200) ayant reçu le signal de niveau implémente un fonctionnement pour commander un degré de fonctionnement d'un ventilateur (240 ; 430).

13. Procédé de commande selon la revendication 11 ou la revendication 12, où l'implémentation de fonctionnement comprend la commande de fonctionnement d'un compresseur (250, 410) prévu pour comprimer un fluide frigorigène, sur la base du niveau du signal de régulation électrique,
où le compresseur (250, 410) comprend un onduleur prévu pour régler une fréquence de fonctionnement, et
où l'implémentation de fonctionnement comprend la commande de la fréquence de fonctionnement du compresseur (250, 410) sur la base du niveau du signal de régulation électrique.

14. Procédé de commande selon la revendication 11, la revendication 12 ou la revendication 13, où l'implémentation de fonctionnement comprend le contrôle de la consommation d'électricité exigée à partir du signal de niveau.

15. Procédé de commande selon l'une des revendications 11 à 14, où, par implémentation de fonctionnement, l'unité intérieure (40, 130, 200) ayant reçu le signal de niveau règle un débit défini ou une température définie sur la base du niveau du signal de régulation électrique, le débit défini étant une quantité d'air définie à refouler par l'unité intérieure (40, 130, 200), et la température définie étant une température de climatisation de consigne définie de l'air intérieur.

16. Procédé de commande selon l'une des revendications 11 à 15, où l'unité extérieure (30, 120, 400) ayant reçu le signal de niveau est reliée à une pluralité d'unités intérieures (40, 130, 200), et
où, par implémentation de fonctionnement, l'unité extérieure (30, 120, 400) commande de manière différenciée un état de fonctionnement de chaque unité de la pluralité d'unités intérieures (40, 130, 200) sur la base de la consommation d'électricité exigée contrôlée à partir du signal de niveau.

17. Procédé de commande selon l'une des revendications 11 à 16, où, par implémentation de fonctionnement, l'unité extérieure (30, 120, 400) priorise une pluralité d'unités intérieures (40, 130, 200) respectives, et détermine si chaque unité de la pluralité d'unités intérieures (40, 130, 200) doit être mise en service ou non sur la base des priorités.

18. Procédé de commande selon l'une des revendications 11 à 16, où, par implémentation de fonctionnement, l'unité intérieure (40, 130, 200) règle un débit défini ou une température définie sur la base du niveau du signal de régulation électrique, le débit défini étant une quantité d'air définie à refouler par l'unité intérieure, et la température définie étant une température de climatisation de consigne définie de l'air intérieur.

19. Procédé de commande selon l'une des revendications 11 à 18, où une pluralité d'unités intérieures (40, 130, 200) est prévue,
où, par implémentation de fonctionnement, la pluralité d'unités intérieures (40, 130, 200) comprend une unité intérieure maître et une pluralité d'unités intérieures esclaves reliées à l'unité intérieure maître, et
où l'unité intérieure maître commande de manière différenciée le fonctionnement des unités intérieures esclaves respectives sur la base du niveau du signal de régulation électrique en recevant le signal de niveau.

20. Procédé de commande selon l'une des revendications 11 à 19, où, par implémentation de fonctionnement, l'unité extérieure (30, 120, 400) ou l'unité intérieure (40, 130, 200) implémentent un fonctionnement pour régler une consommation d'électricité pendant une durée déterminée, avant retour au fonctionnement normal.
